# EUROPEAN PATENT SPECIFICATION

(11) **EP 4 207 679 B1**
(45) Date of publication and mention of the grant of the patent: **01.10.2025**
(21) Application number: 21218455.0
(22) Date of filing: 31.12.2021
(51) Int. Cl.: H04L 9/40

(54) **METHOD, MOBILE EQUIPMENT, AND SYSTEM FOR KEYSTREAM PROTECTION**
VERFAHREN, MOBILE AUSRÜSTUNG UND SYSTEM FÜR SCHLÜSSELSTROMSCHUTZ
PROCÉDÉ, ÉQUIPEMENT MOBILE, ET SYSTÈME DE PROTECTION DE FLOT DE CLÉS

(43) Date of publication of application: 05.07.2023
(73) Proprietor: G-Innovations Viet Nam Joint Stock Company, Ha Noi City (VN)
(72) Inventor: PHAM, Tuan Vuong, Tam Diep City (VN); NGUYEN, Duc Minh, Ha Noi City (VN); MAI, Huy Toan, Ha Noi City (VN)
(74) Representative: KATZAROV S.A.

(56) References cited:
- US-A1- 2008 133 909
- US-A1- 2016 241 518
- LOUNIS KARIM ET AL: "Attacks and Defenses in Short-Range Wireless Technologies for IoT", IEEE ACCESS, IEEE, USA, vol. 8, 11 May 2020 (2020-05-11), pages 88892 - 88932, XP011790027, DOI: 10.1109/ACCESS.2020.2993553

## Description

### TECHNICAL FIELD

The present invention refers to the technical field of security for MEs (Mobile Equipments) in the mobile network, in general. And more particularly, to a method, mobile equipment, and system for data plane keystream protection against Man-in-the-Middle hijacking.

### BACKGROUND ART

It has been known that mobile equipments (MEs), such as mobile phones, IoT devices, are capable of connecting to packet-based mobile phone networks (UMTS - 3G, LTE - 4G, 5G *etc*.) to enable the transmission of data, sounds, voices, and images.

In order to establish and use a (voice, data) connection with a mobile network, several components are involved: mobile equipments (MEs), base stations (BTS) or eNodeB as intermediate connectors, and the core network for mobility management with the aim to provide permanent data/voice access.
1. ME: The mobile equipment is the end device providing services to the user. It has a permanent identity, the International Mobile Subscriber Identity (IMSI), and different temporary identities within the network. Besides the connection establishment, the ME also applies encryption/decryption and integrity protection for transmissions through the network.
2. BTS: The BTS is responsible for radio resource management and user data encryption. The BTS in the LTE mobile network is eNodeB.
3. Core Network: The Core Network components are responsible for authentication, mobility management, and forwarding of user data.

The above components in the mobile networks should obey the standard protocols in the 3GPP specifications. In general, the 3GPP specifies three layers in essential regulatory documents: physical layer (layer 1), data link layer (layer 2) and network layer (layer 3). Furthermore, the protocol standard differentiates two planes: Control plane transports control signals in the network (among ME, BTS and core network); User plane transports user data (voice, SMS, data,...) between ME and BTS.
1. Physical Layer: As the lowest layer in the protocol stack, the physical layer is responsible for transmitting information over the air interface. The physical layer searches for cell candidates and synchronizes with a selected cell. Further, it controls the transmission power for the physical channel and adapts encoding and modulation schemes. The values for these parameters are adjusted by a channel quality indicator that is regularly sent by the UE's MAC protocol.
2. Data Link Layer: The data link layer extends the physical layer bit pipe by additional services towards the upper layers and provides mechanisms for reliability, security, and integrity. Data Link Layer consists of 3 layers: MAC layer, RLC layer and PDCP layer.
   a. Medium Access Control (MAC). The MAC protocol manages the access to the radio resources of the network.
   b. Radio Link Control (RLC). Depending on the transmission mode, the RLC protocol applies error correction, segmentation, and assembles data into the correct order of upper-layer packets. Furthermore, it manages retransmissions including the detection of retransmitted packet.
   c. Packet Data Convergence Protocol (PDCP). The PDCP protocol provides encryption and integrity protection for control plane messages to the overlying Radio Resource Control (RRC) layer and transfers encrypted user plane data to upperlevel protocols like IP. Within the data link layer, the PDCP layer is the first to apply encryption algorithms, hence, we can directly read the payload and header information of all packets below this sublayer.
3. Network Layer: On the network layers, Non-Access Stratum (NAS), Radio Resource Control (RRC), belonging to the control plane are used to transport and manage control signals/messages between ME and BTS. The NAS layer performs mobility with the core network using encrypted and integrity protected messages. On the RRC sublayer, all radio connections between the UE and the BTS are managed, including the configuration of all lower-level protocols down to the physical layer. For the user plane, the IP protocol layer handles transmissions to overlying transport protocols like TCP and UDP.

The data of user applications on the host are transmitted and received through the network layer (layer 3), the data link layer (layer 2) and the physical layer (layer 1). Note that, the data of the user applications cannot only real user data but also control data of the above protocol layers (such as ICMP, SMS signalling, ...).

The mobile network uses several authentication and encryption mechanisms to ensure the security in the network.

When the ME connects to the network, the change-response protocol is used to authenticate and agree on a session key between the ME and the core network.

Using that temporary key, the NAS and the PRC sublayers can establish encryption and integrity protection mechanisms. The integrity protection is obtained by adding a cipher block chaining message authentication code (CBC-MAC) to the signaling message in the control plane.

On the user plane, the data is encrypted on the PDCP sublayer using AES counter mode (AESCTR) where the plaintext is XORed with the keystream to create the ciphertext.

In the ME, functions of the protocol layers are implemented in the baseband processor. The application processor uses API (Application Programming Interface) provided by the baseband processor to transfers application data through the three above layers.

Note that, on the user plane, there is no mechanism being implemented to check the data integrity. Consequently, it is possible that the keystream can be compromised, and the user data can be hijacked. Several attacks are reported [1, 2, 3, 4, 5, 6] that exploit the un-integrity of the data connection in the user plane of the mobile networks and the acknowledgement/response of the application protocol (such as ICMP or SMS over SIP/IMS). In those attacks, a known plaintext IP packet is sent by the attacker to the ME. The network encrypts that IP packet using keystream and sends it to the ME. The attacker's fake BTS captures the encrypted IP packet, may/may not alter several fields in the IP packet. The altered IP packet requires the victim ME to response with an IP packet in which the data field is the same as the sent packet. The encrypted responses/data of such plaintext are captured using the same fake BTS. Knowing the plaintext and the encrypted data, the attacker can easily derive the keystream that being used for the data connection between the ME and the network.

Several countermeasures are proposed in [1, 7]. In [1], authors proposed to use additional security mechanism in IP layers where the server should use secure protocol such as TLS/HTTPS. In [7], a new CRC mechanism is introduced to the connection between UE and BTS to check the integrity of the data connection in the user plane. Such proposed methods lead to the revision of the protocol standards and upgrading the already-deployed UE, BTS and core network equipment. Consequently, the in-the-market UEs will still be affected, and the already-deployed networks will not be soon upgraded. Moreover, adding new mechanism to the data/user plane might affect the latency and the real-time requirement of the data plane transmission.

To prevent forgery, publication No. US 2008/0133909 A1 suggests a method of inserting authentication code, the method comprising determining whether to insert authentication code into a data packet, based on at least one of the importance and type of the data packet, the authentication code being used to determine whether the data packet is altered; and selectively inserting the authentication code into the data packet, based on the determination.

Publication No. US 2016/0241518 A1 refers to a method, apparatus, and system for distributing a rule to a distributed capture system and storing the rule in a global configuration database, in which in the event of a detected registered content transfer, the search engine may activate the notification module, which sends an alert to the registered document owner. In addition, the master signature database may change, and such changes require an update to at least some of the local signature databases. This update may be performed in real-time as the change is made in the master signature database, periodically, or on command.

Document [9] mentions a countermeasure for a WEP packet decryption attack (page 14, column 2, paragraph b). In particular, WEP mechanism does not provide forward secrecy. Encryption algorithms that are based on xoring the plaintext by a keystream (e.g., RC4) should not apply the same keystream twice. This provides forward secrecy.

However, there is a limitation in the above cited documents in solving the problem of preventing keystream vulnerabilities of an IP packet.

### Citation list

### Non-Patent Literature

[1] Rupprecht, David & Kohls, Katharina & Holz, Thorsten & Poepper, Christina, IMP4GT: IMPersonation Attacks in 4G NeTworks, 2020. The citation is herein referred to as [1].
[2] Rupprecht, David & Kohls, Katharina & Holz, Thorsten & Popper, Christina, Breaking LTE on Layer Two, 2019. The citation is herein referred to as [2].
[3] Hussain, Syed & Echeverria, Mitziu & Karim, Imtiaz & Chowdhury, Omar & Bertino, Elisa, 5GReasoner: A Property-Directed Security and Privacy Analysis Framework for 5G Cellular Network Protocol, 2019. The citation is herein referred to as [3].
[4] Hojoon Yang, Sangwook Bae, Mincheol Son, Hongil Kim, Song Min Kim, and Yongdae Kim, Hiding in plain signal: physical signal overshadowing attack on LTE, In Proceedings of the 28th USENIX Conference on Security Symposium (SEC'19), 2019. The citation is herein referred to as [4].
[5] Chlosta, Merlin & Rupprecht, David & Holz, Thorsten & Pöpper, Christina, LTE security disabled: misconfiguration in commercial networks, 2019. The citation is herein referred to as [5].
[6] Lu, Muhammad Taqi Raza and Songwu, On Key Reinstallation Attacks over 4G/5G LTE Networks: Feasibility and Negative Impact, University of California, 2018. The citation is herein referred to as [6].
[7] Philips International B.V, Clarifications on Cryptographic CRC in MAC to avoid MitM relay nodes, 2021. The citation is herein referred to as [7].
[8] IR.92 - IMS Profile for Voice and SMS, GSM Association, 2019. The citation is herein referred to as [8].
[9] LOUNIS KARIM ET AL: "Attacks and defenses in Short-Range Wireless Technologies for IoT", IEEE ACCESS, IEEE, USA, vol. 8, 11 May 2020 (2020-05-11), pages 88892-88932, XP011790027. The citation is herein referred to as [9].

### SUMMARY OF THE INVENTION

The object of the present invention is to provide a method, a mobile equipment, and a system for keystream protection that overcome at least one or some of the aforementioned problems.

Still another object of the present invention is to provide a method, a mobile equipment, and a system for keystream protection from Man-in-the-Middle attacks using a fake BTS.

Still another object of the present invention is to provide a method, a mobile equipment, and a system for keystream protection from cross-layer attacks that exploit the vulnerabilities in the layer 3 (e.g., ICMP, SMS over SIP) and the layer 2 (i.e., unintegrity on data/user plane).

Still another object of the present invention is to provide a method, a mobile equipment, and a system for filtering IP data packets containing possible known plaintext that can be expoited to hijack the keystream.

Another object of the present invention is to provide a method, a mobile equipment, and a system for keystream protection in a UE that is more convenient and simpler to common users.

Still another object of the present invention is to provide a method, a mobile equipment, and a system for common users to enable/disable the protection mechanism without violating the standard protocol and/or without limiting the network services.

Still another object of the present invention is to provide a method, a mobile equipment, and a system for keystream protection without violating latency of the data transmission on the user plane.

To achieve at least the aforementioned objects, in an aspect, the present invention provides a method for keystream protection from un-integrity on data plane vulnerability, the method comprises:
generating a vulnerability detection and prevention unit for detecting and filtering IP packets that may exposes keystream on the data plane, wherein vulnerability detection and prevention unit is executed by a plurality of instructions stored on a mobile equipment and is located in at least one secure processing region that is independent of an application processor and a baseband processor of the mobile equipment; receiving, by the vulnerability detection and prevention unit at least one IP packet of a plurality of IP packets, wherein the plurality of IP packets are forwarded from/to the core network by an IP functions layer in the baseband processor from/to an application protocol functions layer in the application processor; analyzing, by the vulnerability detection and prevention unit, the at least one IP packet to determine whether the at least one IP packet is associated with predetermined keystream vulnerabilities; sending, by the vulnerability detection and prevention unit, a warning message to a user interface of the vulnerability detection and prevention unit in response to determining that the at least one IP packet is associated with the predetermined keystream vulnerabilities; altering, by the vulnerability detection and prevention unit, known and plaintext parts of the threat IP packets using a random text; and acknowledging/responding, by the vulnerability detection and prevention unit, a core network via the IP functions layer in the baseband processor.

According to an embodiment, the above method further comprises sending, by the server, a vulnerability database of predetermined threat IP packets to the application processor or the baseband processor; sending, by the user interface of the vulnerability detection and prevention unit, a request for confirmation of whether to enable the updating of the vulnerability database sent to the vulnerability detection and prevention unit to the user; and updating, by the vulnerability detection and prevention unit, the vulnerability database of threat IP packets into the vulnerability detection and prevention unit in response to the user confirming to enable the updating of the database sent to the vulnerability detection and prevention unit.

According to an embodiment, the updating, by the vulnerability detection and prevention unit, of the vulnerability database into the vulnerability detection and prevention unit is performed automatically.

According to an embodiment, the updating of the vulnerability database may be performed through OTA (Over-The-Air) mechanism or the Internet.

In another aspect, the present invention provides a computer-readable storage medium containing computer instructions that when executed will cause the computer to perform the above method.

### BRIEF DESCRIPTION OF THE DRAWINGS

The above and other objects, features and advantages of the present invention will become more apparent to those of ordinary skill in the art by describing in detail exemplary embodiments thereof with reference to the attached drawings, in which:
Figure 1 is a block diagram representing a mobile equipment implemented network protocol layers that a method for vulnerability detection and prevention for keystream protection is implemented based thereon;
Figure 2 is a flowchart representing a method for vulnerability detection and prevention for keystream protection in a preferred embodiment of the present invention;
Figure 3 is a sequence diagram representing an example of the activity flow of checking and filtering an IP packet;
Figure 4 is a sequence diagram representing the activity flow a vulnerability detection and prevention unit; and
Figure 5 shows the activity flow of updating the database used in analyzing, detecting potentially risk IP packets.

### DETAILED DESCRIPTION

Below, the advantages, effects, and nature of the present invention may be explained through the detailed description of preferred embodiments with reference to the appended figures. However, it should be understood that these embodiments are only described by way of example to clarify the advantages of the present invention, without limiting the scope of the present invention according to the described embodiments.

The terminology used herein is for the purpose of describing particular embodiments only and is not intended to be limiting to the present invention. As used herein, the singular forms "a," "an," "another," and "the" are intended to also include the plural forms, unless the context clearly indicates otherwise. It should be further understood that the terms "comprise," "comprising," "include," and/or "including," when used herein, specify the presence of stated features, integers, steps, operations, elements, parts, or combinations thereof, but do not preclude the presence or addition of one or more other features, integers, steps, operations, elements, parts, or combinations thereof.

Unless otherwise defined, all terms including technical and scientific terms used herein have the same meaning as commonly understood by one of ordinary skill in the art to which this invention belongs. It should be further understood that terms, such as those defined in commonly used dictionaries, should be interpreted as having a meaning that is consistent with their meaning in the context of the relevant art and are not to be interpreted in an idealized or overly formal sense unless expressly so defined herein.

Hereinafter, embodiments will be described in detail with reference to the accompanying drawings, the same or corresponding components are denoted by the same reference numerals regardless of reference numbers, and thus the description thereof will not be repeated.

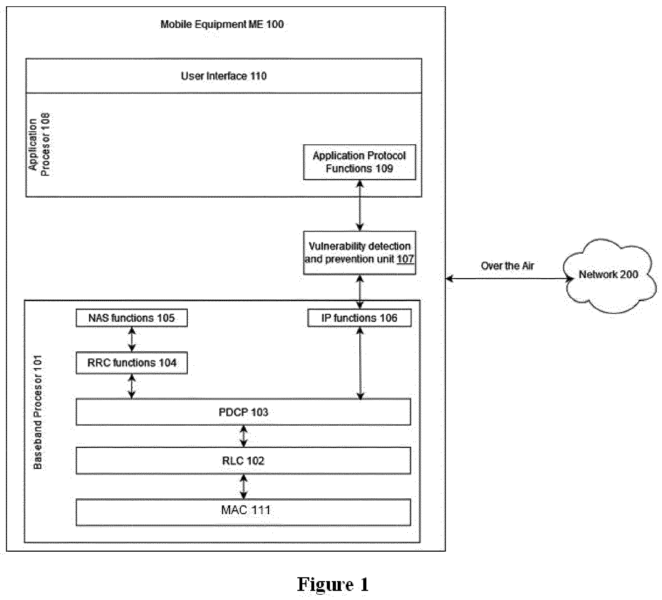

Figure 1 is a block diagram representing a mobile equipment implemented network protocol layers that a method for vulnerability detection and prevention for keystream protection in a preferred embodiment of the present invention is implemented based thereon. The method is implemented based on a mobile equipment (ME) 100 communicates with a network 200 through OTA (Over-The-Air) mechanism based on mobile phone networks (GSM - 2G, UMTS - 3G, LTE - 4G, 5G etc.), or the like.

The mobile equipment 100 includes a baseband processor 101, a vulnerability detection and prevention unit 107, an application processor 108, and a user interface 110 of the vulnerability detection and prevention unit 107. Furthermore, the baseband processor 101 consists of layers implementing the functions of the MAC layer 111, the RLC layer 102, the PDCP layer 103, the RRC functions layer 104, the NAS functions layer 105, and the Internet protocol (IP) functions layer 106. In the application processor, the application protocols are implemented in an application protocol functions layer 109. Note that the application protocol functions layer 109 may implement but not limited to ICMP, SMS over SIP, ...

Also shown in Figure 1, the vulnerability detection and prevention unit 107 is located between the IP functions layer 106 and the application protocol functions layer 109, or may be understood as located to externally surround the IP functions layer 106 to ensure that the data transferred to and from the IP functions layer 106 all through the vulnerability detection and prevention unit 107, thereby analyzing, detecting, and filtering out insecure data associated with predetermined keystream vulnerabilities, e.g., ICMP echo data, OTA SMS over SIP,.. [8].

Herein, data may be generally understood as transceived information packages occurring during the performance of the mobile equipment 100, e.g., information packages transceived between the mobile equipment 100 and the network 200. It should be noted that the information packages are not particularly limited, such as an information package not only containing a single data, but may also include any combination of data packet. In general, the terms "information package," "data," used herein are widely known in the art. For example, the vulnerability detection and prevention unit 107 functions as a communication bridge with the IP functions layer 106 in the baseband processor 101, and the application protocol functions layer 109 in the application processor 108 through logical communication, application communication in compliance with the 3GPP TS 36.323 specifications.

In addition, the data may also be data clearly described and shown in RFC792 specification, Patent Literature Nos. US 2020037165 A1 and US 2019349772 A1, all of which are intended to be incorporated herein for reference and may be combined with a solution provided according to the present invention by any known means.

The mobile equipment 100 may be one selected from equipments such as mobile phones, cellular phones, smart phones, satellite phones, wireless data cards, wireless personal assistant devices, wireless modems or electronic devices capable of wireless communication with a service provider to transmit and receive voices, sounds, images, data from the network provider.

According to the preferred embodiment, the vulnerability detection and prevention unit 107 contains executable instructions stored on the mobile equipment 100 and located in at least one secure processing region that is independent of the application processor 108 and the baseband processor 101 of the mobile equipment 100, or the vulnerability detection and prevention unit 107 may be located on a secure processing region of an already equipped baseband processor (e.g., a trustzone of an ARM processor). The secure processing region is not limited to the already equipped secure processing region, rather it may be reset or redefined depending on the technologies and supporting capabilities of different microprocessor types.

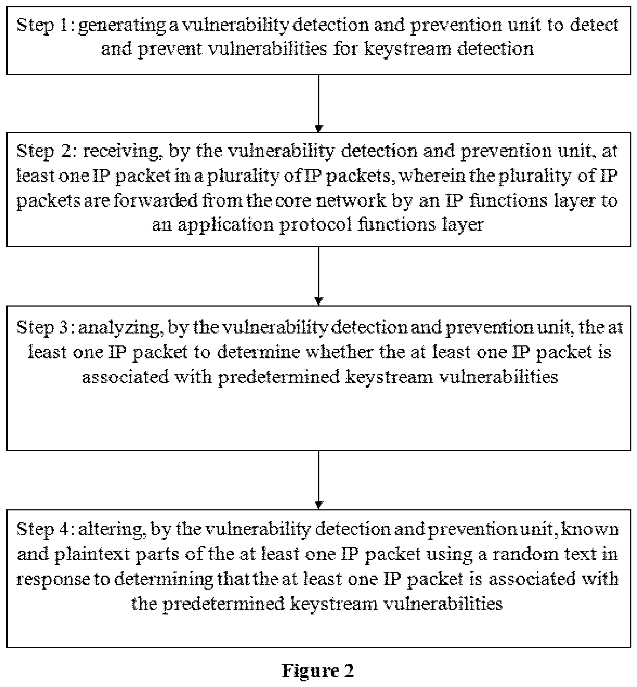

Figure 2 shows a method for vulnerability detection and prevention for keystream protection according to the preferred embodiment as described in Figure 1. The following description is made with reference to Figure 2 as well as Figure 1.

The method for vulnerability detection and prevention for keystream protection comprises the steps described below.

Step 1: generating the vulnerability detection and prevention unit 107 to detect and prevent keystream vulnerabilities for the mobile equipment 100.

In this step, the vulnerability detection and prevention unit 107 is executed by a plurality of instructions stored on the mobile equipment 100, and located in at least one secure processing region that is independent of the application processor 108 and the baseband processor 101 of the mobile equipment 100.

Step 2: receiving, by the vulnerability detection and prevention unit 107, at least one IP packet of a plurality of IP packets that are forwarded from the network 200 by the IP functions layer106 to the application protocol functions layer 109 or are sent from the application protocol functions layer 109 to the network 200.

Step 3: analyzing, by the vulnerability detection and prevention unit 107, the at least one IP packet to determine whether the at least one IP packet is associated with predetermined keystream vulnerabilities.

In this step, the vulnerability detection and prevention unit 107 only analyzes IP packet headers to not only determine the predetermined keystream vulnerabilities but also guarantee latency requirement of the IP packet transmission.

In this step, the vulnerability detection and prevention unit 107 may or may not record the data fields of the potentially risk IP packets. The risk IP packets are referred to as IP packets which are potentially associated with the predetermined keystream vulnerabilities.

Step 4: altering, by the vulnerability detection and prevention unit 107, known and plaintext parts of the at least one IP packet using a random text in response to determining that the at least one IP packet is associated with the predetermined keystream vulnerabilities.

According to an embodiment of the invention, the method for vulnerability detection and prevention for keystream protection may further comprise sending a warning message to the user interface 110 of the vulnerability detection and prevention unit 107 in response to determining that the at least one IP packet is associated with the predetermined keystream vulnerabilities.

In the preferred embodiment, the vulnerability detection and prevention unit 107 performs the analysis (i.e., the above step 3) to determine whether there are aforementioned vulnerabilities, which may be performed via comparing the IP packet headers with the IP packet header having known vulnerabilities and storing in a vulnerability database.

However, in practice, the predetermination of the vulnerabilities is not easy. Further, regarding known vulnerabilities, attackers (e.g., hackers or crackers) always change the methods or contents of the information packages associated with presumingly known vulnerabilities. For example, regarding junk messages, or messages containing malicious codes, the same message contents or malicious codes may be modified to add further information or replace some small details to no longer be the same as already known contents or malicious codes. This has led to effectiveness reduction in the comparison based on the vulnerability database.

In the preferred embodiment, the vulnerability detection and prevention unit 107 may load or update the vulnerability database from a server, and optionally, the loading, or updating of the vulnerability database may be performed through OTA (Over-The-Air) mechanism, Internet connection, or the like. As a result, the vulnerability detection and prevention unit 107 may detect, filter, or even prevent the vulnerabilities that have not been known before.

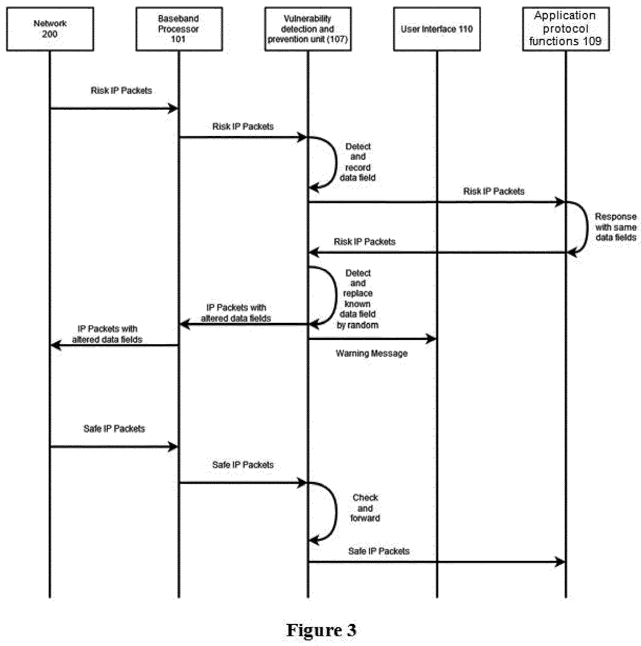

Next, examples of specific active event/status flows of the method for vulnerability detection and prevention in a SIM according to the preferred embodiment of Figure 1 and Figure 2 will be described based on Figure 3, to better specify the above-mentioned method for vulnerability detection and prevention in a SIM.

Accordingly, Figure 3 shows the activity flow of IP packets checking and filtering. The following description is made with reference to Figure 3 as well as Figure 1.

As shown in Figure 3, it is assumed that the network 200 sends an IP packet (for example, the at least one IP packet as mentioned in the description of Figure 2) that is potentially risk to the ME 100, which ME may response with the same data field as the sender desires, e.g., the attacker sends ICMP packet with known data fields to the ME 100 and captures the response packet to derive the keystream. According to this activity flow, the potentially risk IP packet will be sent to the baseband processor 101, and obligated to pass through the vulnerability detection and prevention unit 107 for analyzing and checking potential vulnerabilities. When the vulnerability detection and prevention unit 107 analyzes and detects the IP packet that might be potentially risk, the data field of the potential risk IP packet is recorded. The potentially risk IP packet is forwarded to the application protocol functions layer 109 in the application processor 108. The application protocol functions layer 109 responses by an IP packet with the same data field as the received IP packet. The responded IP packet will be sent to the baseband processor 101, and obligated to pass through the vulnerability detection and prevention unit 107 for analyzing and checking duplicate. When the vulnerability detection and prevention unit 107 detect a duplicated data field in the responded IP packet, the data field will be replaced by random bytes (i.e., the random text as stated in Figure 2) such that it cannot be used to derived keystream. The data field replacement by the random bytes can be done either in the IP packet responded by the application protocol functions layer 109 to the baseband processor 101 as described above or in the IP packet sent by the baseband processor 101 to the application protocol functions layer 109. When the vulnerability detection and prevention unit 107 detects the duplicated data field in the responded IP packet, it sends a warning message to the user interface 110.

Also shown in Figure 3, it is assumed that the network 200 sends a safe IP packet to the application protocol functions layer 109, the IP packet will be sent to the baseband processor 101, and obligated to pass through the vulnerability detection and prevention unit 107 for analyzing and checking whether the IP packet contains a potential known data field. When the vulnerability detection and prevention unit 107 checks, analyzes, and does not detect any vulnerability, it will forward the IP packet to the application protocol functions layer 109 and vice versa without altering the packet data fields thereof.

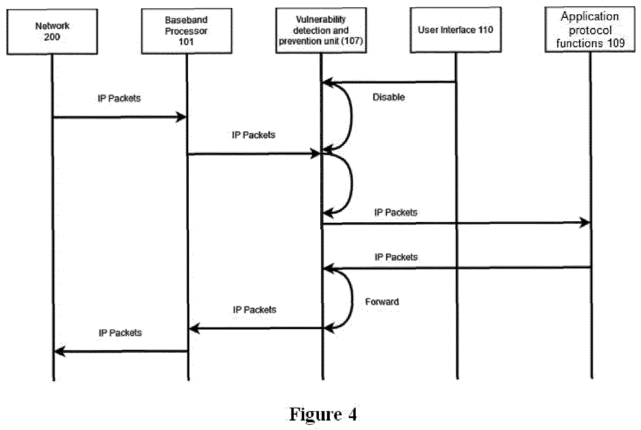

Figure 4 is a sequence diagram representing the activity flow a vulnerability detection and prevention unit according to the preferred embodiment of Figure 1, Figure 2, and Figure 3. The following description is made with reference to Figure 4 as well as Figure 1.

In particular, Figure 4 shows the activity flow of enabling/disabling the vulnerability detection and prevention unit 107 performed by the user through the user interface 110 of the vulnerability detection and prevention unit.

As shown in Figure 4, it is assumed that the user wants to disable the checking of the vulnerability detection and prevention unit 107, and sends a request for disabling the protection of the vulnerability detection and prevention unit 107. The vulnerability detection and prevention unit 107 will forward all IP packets between the baseband processor 101 and the application protocol functions layer 109.

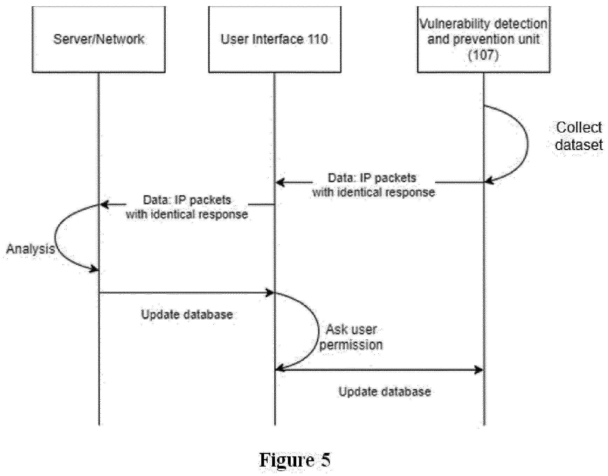

Figure 5 shows the activity flow of updating the vulnerability database used in analyzing, detecting potentially risk IP packets according to the preferred embodiment of Figure 1 to Figure 4. The following description is made with reference to Figure 1 and Figure 5.

As shown in Figure 5, a dataset on the vulnerabilities including at least one of the IP packets, and vulnerability check results may be collected by the vulnerability detection and prevention unit 107. Of course, the dataset collection is not limited to the vulnerability detection and prevention unit 107 of the mobile equipment 100 that may in general be collected from multiple different mobile equipments, and even multiple different sources to generate a large database, even including simulated data. Advantageously, newly detected or simulated vulnerabilities may help to update the vulnerability database for multiple different mobile equipments.

When the vulnerability detection and prevention unit 107 collects the dataset, it will send the dataset through the user interface 110 of the vulnerability detection and prevention unit, to a remote server. The dataset will be used to analyze for generation of the new vulnerability database or updated vulnerability database. This vulnerability database will be updated for the vulnerability detection and prevention unit 107. The updating may be actively performed from the user request, or may be sent from the server and updated when there is user permission. According to an embodiment, the updating, by the vulnerability detection and prevention unit 107, of the vulnerability database into the vulnerability detection and prevention unit 107 may be performed automatically.

The server is configured to send the vulnerability database to the application processor 108 or the baseband processor 101.

According to an embodiment illustrated on Figure 5, the server sends a notification to update the vulnerability database for the vulnerability detection and prevention unit 107 through the user interface 110 of the vulnerability detection and prevention unit 107, and checks the user permission, if permitted, it will perform the updating of the vulnerability database for the vulnerability detection and prevention unit 107.

In a further aspect, the present invention provides a system for vulnerability detection and prevention for keystream protection. In general, the system for vulnerability detection and prevention for keystream protection includes a mobile equipment 100 and a server (for example, the server as mentioned in Figure 5).

The server may be a centralized or decentralized server or server cluster, or a server with cloud technology application.

The mobile equipment 100 has similar features and functions to those described above, repetitions thereof are intended for omission to avoid redundancy.

From above, the present invention has been described in details according to preferred embodiments. It is obvious that a person of ordinary may easily generate variations and modifications to described embodiments. Thus, these variations and modifications do not fall outside the scope of the present invention as determined in the appended claims.

## Claims

1. A method for vulnerability detection and prevention for keystream protection, the method comprising:
generating a vulnerability detection and prevention unit (107) for detecting and preventing vulnerabilities for keystream protection, wherein the vulnerability detection and prevention unit (107) is executed by a plurality of instructions stored on a mobile equipment (100), and is located in at least one secure processing region that is independent of an application processor (108) and a baseband processor (101) of the mobile equipment (100);
receiving, by the vulnerability detection and prevention unit (107), at least one IP packet of a plurality of IP packets, wherein the plurality of IP packets are sent from a network (200) to an application protocol functions layer (109) in the application processor (108), or sent from the application protocol functions layer (109) to the network (200);
analyzing, by the vulnerability detection and prevention unit (107), the at least one IP packet to determine whether the at least one IP packet is associated with predetermined keystream vulnerabilities;
**characterised by** when the at least one IP packet is determined to be associated with the predetermined keystream vulnerabilities, the method comprising:
recording, by the vulnerability detection and prevention unit (107), the data field of the at least one IP packet;
responding, by the application protocol functions layer (109), with a responded IP packet with the same data field as the at least one IP packet; and
replacing, by the vulnerability detection and prevention unit (107), the data field of the responded IP packet by random bytes when the vulnerability detection and prevention unit (107) detects a duplicated data field in the responded IP packet such that the responded IP packet cannot be used to derive a keystream.

2. The method according to claim 1, wherein the method further comprises sending, by the vulnerability detection and prevention unit (107), a warning message to a user interface (110) of the vulnerability detection and prevention unit (107) in response to determining that the at least one IP packet is associated with the predetermined keystream vulnerabilities.

3. The method according to claim 2, wherein the method further comprises:
disabling, by the user interface (110) of the vulnerability detection and prevention unit (107), the vulnerability detection and prevention unit (107).

4. The method according to claim 1, wherein the vulnerability detection and prevention unit (107) performs the analyzing of the at least one IP packet to determine whether the at least one IP packet is associated with the predetermined keystream vulnerabilities by using a vulnerability database using the at least one IP packet as input data.

5. The method according to claim 4, wherein the method further comprises:
sending, by the server, the vulnerability database to the mobile equipment (100);
sending, by the user interface (110) of the vulnerability detection and prevention unit (107), a request for confirmation of whether to enable the updating of the vulnerability database sent to the vulnerability detection and prevention unit (107) to the user; and
updating, by the vulnerability detection and prevention unit (107), the vulnerability database into the vulnerability detection and prevention unit (107) in response to the user confirming to enable the updating of the vulnerability database sent to the vulnerability detection and prevention unit (107).

6. The method according to claim 5, wherein the updating, by the vulnerability detection and prevention unit (107), of the vulnerability database into the vulnerability detection and prevention unit is performed automatically (107).

7. The method according to claim 5 or 6, wherein the updating of the vulnerability database may be performed through OTA (Over-The-Air) mechanism or the Internet.

8. A computer-readable storage medium containing computer instructions that when executed will cause a computer to perform the method according to any one of claims 1-7.

9. A mobile equipment (100) including an application processor (108), a baseband processor (101), and a vulnerability detection and prevention unit (107) for detecting and preventing vulnerabilities for the keystream protection, wherein:
the vulnerability detection and prevention unit (107) is located in at least one secure processing region that is independent of the application processor (108) and the baseband processor (101);
the vulnerability detection and prevention unit (107) is configured to receive at least one IP packet of a plurality of IP packets, wherein the plurality of IP packets are sent from a network (200) to an application protocol functions layer (109) in the application processor (108), or sent from the application protocol functions layer (109) to the network (200);
the vulnerability detection and prevention unit (107) is further configured to analyze the at least one IP packet to determine whether the at least one IP packet is associated with predetermined keystream vulnerabilities;
**characterised by** when the at least one IP packet is determined to be associated with the predetermined keystream vulnerabilities:
the vulnerability detection and prevention unit (107) records the data field of the at least one IP packet;
the application protocol functions layer (109) responds with a responded IP packet with the same data field as the at least one IP packet; and
the vulnerability detection and prevention unit (107) replaces the data field of the responded IP packet by random bytes when the vulnerability detection and prevention unit (107) detects a duplicated data field in the responded IP packet such that the responded IP packet cannot be used to derive a keystream.

10. The equipment (100) according to claim 9, wherein the vulnerability detection and prevention unit (107) is configured to be located in a trust zone of the baseband processor (101).

11. The equipment (100) according to claim 10, wherein the vulnerability detection and prevention unit (107) is configured to send a warning message to a user interface (110) of the vulnerability detection and prevention unit (107) in response to determining that the at least one IP packet is associated with the predetermined keystream vulnerabilities.

12. The equipment (100) according to claim 9, wherein the vulnerability detection and prevention unit (107) performs the analyzing of the at least one IP packet to determine whether the at least one IP packet is associated with the predetermined keystream vulnerabilities by using a vulnerability database using the at least one IP packet as input data.

13. A system for vulnerability detection and prevention for keystream protection, the system including:
a mobile equipment (100) according to any one of claims 9-12; and
a server, wherein
the vulnerability detection and prevention unit (107) is configured to collect a vulnerability dataset comprising the at least one IP packet, and vulnerability check results, and send the dataset to the application processor (108) or the baseband processor (101) for sending to the server; and
the server is configured to analyze and update the vulnerability database based on the dataset.

14. The system according to claim 13, wherein:
the server is configured to send the vulnerability database to the application processor (108) or the baseband processor (101);
the user interface (110) of the vulnerability detection and prevention unit (107) is configured to send a request for confirmation of whether to enable the updating of the vulnerability database sent to the vulnerability detection and prevention unit (107) to the user; and
the vulnerability detection and prevention unit (107) is configured to update the vulnerability database into the vulnerability detection and prevention unit (107) in response to the user confirming to enable the updating of the vulnerability database sent to the vulnerability detection and prevention unit (107).

15. The system according to claim 14, wherein the vulnerability detection and prevention unit (107) performs the updating of the vulnerability database into the vulnerability detection and prevention unit (107) automatically.

16. The system according to claim 13 or 14, wherein the updating of the vulnerability database may be performed through an OTA (Over-The-Air) mechanism or the Internet.

## Patentansprüche

1. Verfahren zur Erkennung und Verhinderung von Schwachstellen für den Schutz von Schlüsselströmen, wobei das Verfahren umfasst:
Erzeugen einer Einheit zur Erkennung und Verhinderung von Schwachstellen (107) zum Erkennen und Verhindern von Schwachstellen für den Schutz von Schlüsselströmen, wobei die Einheit zur Erkennung und Verhinderung von Schwachstellen (107) durch eine Vielzahl von Anweisungen ausgeführt wird, die auf einer mobilen Einrichtung (100) gespeichert sind, und sich in zumindest einem sicheren Verarbeitungsbereich befindet, der von einem Anwendungsprozessor (108) und einem Baseband-Prozessor (101) der mobilen Einrichtung (100) unabhängig ist;
Empfangen zumindest eines IP-Pakets einer Vielzahl von IP-Paketen durch die Einheit zur Erkennung und Verhinderung von Schwachstellen (107), wobei die Vielzahl von IP-Paketen von einem Netzwerk (200) an eine Anwendungs-Protokoll-Funktions-Schicht (109) in dem Anwendungsprozessor (108) gesendet wird, oder von der Anwendungs-Protokoll-Funktions-Schicht (109) an das Netzwerk (200) gesendet wird;
Analysieren des zumindest einen IP-Pakets durch die Einheit zur Erkennung und Verhinderung von Schwachstellen (107), um zu bestimmen, ob das zumindest eine IP-Paket mit vorbestimmten Schlüsselstromschwachstellen assoziiert ist;
**dadurch gekennzeichnet, dass**, wenn bestimmt wird, dass das zumindest eine IP-Paket mit den vorbestimmten Schlüsselstromschwachstellen assoziiert ist, das Verfahren umfasst:
Aufzeichnen des Datenfelds des zumindest einen IP-Pakets durch die Einheit zur Erkennung und Verhinderung von Schwachstellen (107);
Antworten durch die Anwendungs-Protokoll-Funktions-Schicht (109), mit einem Antwort-IP-Paket mit demselben Datenfeld wie das zumindest eine IP-Paket; und
Ersetzen des Datenfelds des Antwort-IP-Pakets mit Zufallsbytes durch die Einheit zur Erkennung und Verhinderung von Schwachstellen (107), wenn die Einheit zur Erkennung und Verhinderung von Schwachstellen (107) ein dupliziertes Datenfeld in dem Antwort-Datenfeld erkennt, so dass das Antwort-IP-Paket nicht verwendet werden kann, um einen Schlüsselstrom abzuleiten.

2. Verfahren nach Anspruch 1, wobei das Verfahren in Ansprechen auf das Bestimmen, dass das zumindest eine IP-Paket mit den vorbestimmten Schlüsselstromschwachstellen assoziiert ist, ferner das Senden einer Warnmeldung an eine Benutzerschnittstelle (110) der Einheit zur Erkennung und Verhinderung von Schwachstellen (107) durch die Einheit zur Erkennung und Verhinderung von Schwachstellen (107) umfasst.

3. Verfahren nach Anspruch 2, wobei das Verfahren ferner umfasst:
Deaktivieren der Einheit zur Erkennung und Verhinderung von Schwachstellen (107) durch die Benutzerschnittstelle (110) der Einheit zur Erkennung und Verhinderung von Schwachstellen (107).

4. Verfahren nach Anspruch 1, wobei die Einheit zur Erkennung und Verhinderung von Schwachstellen (107) das Analysieren des zumindest einen IP-Pakets, um zu bestimmen, ob das zumindest eine IP-Paket mit den vorbestimmten Schlüsselstromschwachstellen assoziiert ist, durchführt, indem es eine Schwachstellen-Datenbank unter Verwendung des zumindest einen IP-Pakets als Eingangsdaten verwendet.

5. Verfahren nach Anspruch 4, wobei das Verfahren ferner umfasst:
Senden der Schwachstellen-Datenbank an die mobile Einrichtung (100) durch den Server;
Senden einer Anforderung zur Bestätiung, ob die Aktualisierung der Schwachstellen-Datenbank, die an die Einheit zur Erkennung und Verhinderung von Schwachstellen (107) gesendet wurde, ermöglicht werden soll, an den Benutzer durch die Benutzerschnittstelle (110) der Einheit zur Erkennung und Verhinderung von Schwachstellen (107); und
Aktualisieren der Schwachstellen-Datenbank in der Einheit zur Erkennung und Verhinderung von Schwachstellen (107) durch die Einheit zur Erkennung und Verhinderung von Schwachstellen (107)in Antwort darauf, dass der Benutzer das Ermöglichen der Aktualisierung der Schwachstellen-Datenbank, die an die Einheit zur Erkennung und Verhinderung von Schwachstellen (107) gesendet wurde, bestätigt.

6. Verfahren nach Anspruch 5, wobei
das Aktualisieren der Schwachstellen-Datenbank in der Einheit zur Erkennung und Verhinderung von Schwachstellen automatisch (107) durch die Einheit zur Erkennung und Verhinderung von Schwachstellen (107) durchgeführt wird.

7. Verfahren nach Anspruch 5 oder 6, wobei die Aktualisierung der Schwachstellendatenbank über einen OTA-Mechanismus (Over-The-Air) oder das Internet durchgeführt werden kann.

8. Computerlesbares Speichermedium, das Computeranweisungen enthält, die, wenn sie ausgeführt werden, einen Computer veranlassen, das Verfahren nach einem der Ansprüche 1-7 durchzuführen.

9. Mobile Einrichtung (100), die einen Anwendungsprozessor (108), einen Baseband-Prozessor (101) und eine Einheit zur Erkennung und Verhinderung von Schwachstellen (107) zum Erkennen und Verhindern von Schwachstellen für den Schutz von Schlüsselströmen beinhaltet, wobei:
die Einheit zur Erkennung und Verhinderung von Schwachstellen (107) sich in zumindest einem sicheren Verarbeitungsbereich befindet, der von dem Anwendungsprozessor (108) und dem Baseband-Prozessor (101) unabhängig ist;
die Einheit zur Erkennung und Verhinderung von Schwachstellen (107) dazu ausgestaltet ist, zumindest ein IP-Paket einer Vielzahl von IP-Paketen zu empfangen, wobei die Vielzahl von IP-Paketen von einem Netzwerk (200) an eine Anwendungs-Protokoll-Funktions-Schicht (109) in dem Anwendungsprozessor (108) gesendet wird, oder von der Anwendungs-Protokoll-Funktions-Schicht (109) an das Netzwerk (200) gesendet wird;
die Einheit zur Erkennung und Verhinderung von Schwachstellen (107) ferner dazu ausgestaltet ist, das zumindest eine IP-Paket zu analysieren, um zu bestimmen, ob das zumindest eine IP-Paket mit vorbestimmten Schlüsselstromschwachstellen assoziiert ist;
**dadurch gekennzeichnet, dass**, wenn bestimmt wird, dass das zumindest eine IP-Paket mit den vorbestimmten Schlüsselstromschwachstellen assoziiert ist,
die Einheit zur Erkennung und Verhinderung von Schwachstellen (107) das Datenfeld des zumindest einen IP-Pakets aufzeichnet;
die Anwendungs-Protokoll-Funktions-Schicht (109) mit einem Antwort-IP-Paket mit demselben Datenfeld wie das zumindest eine IP-Paket antwortet; und
die Einheit zur Erkennung und Verhinderung von Schwachstellen (107) das Datenfeld des Antwort-IP-Pakets mit Zufallsbytes ersetzt, wenn die Einheit zur Erkennung und Verhinderung von Schwachstellen (107) ein dupliziertes Datenfeld in dem Antwort-Datenfeld erkennt, so dass das Antwort-IP-Paket nicht verwendet werden kann, um einen Schlüsselstrom abzuleiten.

10. Einrichtung (100) nach Anspruch 9, wobei die Einheit zur Erkennung und Verhinderung von Schwachstellen (107) dazu ausgestaltet ist, sich in einer vertrauenswürdigen Zone des Baseband-Prozessors (101) zu befinden.

11. Einrichtung (100) nach Anspruch 10, wobei die Einheit zur Erkennung und Verhinderung von Schwachstellen (107) dazu ausgestaltet ist, in Ansprechen auf das Bestimmen, dass das zumindest eine IP-Paket mit den vorbestimmten Schlüsselstromschwachstellen assoziiert ist, eine Warnmeldung an eine Benutzerschnittstelle (110) der Einheit zur Erkennung und Verhinderung von Schwachstellen (107) zu senden.

12. Einrichtung (100) nach Anspruch 9, wobei die Einheit zur Erkennung und Verhinderung von Schwachstellen (107) das Analysieren des zumindest einen IP-Pakets, um zu bestimmen, ob das zumindest eine IP-Paket mit den vorbestimmten Schlüsselstromschwachstellen assoziiert ist, durchführt, indem es eine Schwachstellen-Datenbank unter Verwendung des zumindest einen IP-Pakets als Eingangsdaten verwendet.

13. System zur Erkennung und Verhinderung von Schwachstellen für den Schutz von Schlüsselströmen, wobei das System beinhaltet:
eine mobile Einrichtung (100) nach einem der Ansprüche 9-12; und
einen Server, wobei
die Einheit zur Erkennung und Verhinderung von Schwachstellen (107) dazu ausgestaltet ist, einen Schwachstellen-Datensatz zu sammeln, der das zumindest eine IP-Paket und Ergebnisse einer Schwachstellenprüfung umfasst, und den Datensatz an den Anwendungs-Prozessor (108) oder den Baseband-Prozessor (101) zum Senden an den Server zu senden; und
der Server dazu ausgestaltet ist, die Schwachstellen-Datenbank auf der Grundlage des Datensatzes zu analysieren und zu aktualisieren.

14. System nach Anspruch 13, wobei:
der Server dazu ausgestaltet ist, die Schwachstellen-Datenbank an den Anwendungsprozessor (108) oder den Baseband-Prozessor (101) zu senden;
die Benutzerschnittstelle (110) der Einheit zur Erkennung und Verhinderung von Schwachstellen (107) dazu ausgestaltet ist, eine Anforderung zur Bestätiung, ob die Aktualisierung der Schwachstellen-Datenbank, die an die Einheit zur Erkennung und Verhinderung von Schwachstellen (107) gesendet wurde, ermöglicht werden soll, an den Benutzer zu senden; und
die Einheit zur Erkennung und Verhinderung von Schwachstellen (107) dazu ausgestaltet ist, in Antwort darauf, dass der Benutzer das Ermöglichen der Aktualisierung der Schwachstellen-Datenbank, die an die Einheit zur Erkennung und Verhinderung von Schwachstellen (107) gesendet wurde, bestätigt, die Schwachstellen-Datenbank in der Einheit zur Erkennung und Verhinderung von Schwachstellen (107) zu aktualisieren.

15. System nach Anspruch 14, wobei die Einheit zur Erkennung und Verhinderung von Schwachstellen (107) das Aktualisieren der Schwachstellen-Datenbank in der Einheit zur Erkennung und Verhinderung von Schwachstellen (107) automatisch durchführt.

16. Verfahren nach Anspruch 13 oder 14, wobei die Aktualisierung der Schwachstellendatenbank über einen OTA-Mechanismus (Over-The-Air) oder das Internet durchgeführt werden kann.

## Revendications

1. Méthode de détection et de prévention des vulnérabilités pour la protection d'un flux de données, comprenant de :
générer une unité de détection et de prévention des vulnérabilités (107) pour détecter et prévenir les vulnérabilités pour la protection du flux de données, dans laquelle l'unité de détection et de prévention des vulnérabilités (107) est exécutée par une pluralité d'instructions stockées sur un équipement mobile (100), et est située dans au moins une région de traitement sécurisée qui est indépendante d'un processeur d'application (108) et d'un processeur de bande de base (101) de l'équipement mobile (100) ;
recevoir, par l'unité de détection et de prévention des vulnérabilités (107), au moins un paquet IP parmi une pluralité de paquets IP, la pluralité de paquets IP étant envoyée d'un réseau (200) à une couche de fonctions de protocole d'application (109) dans le processeur d'application (108), ou envoyée de la couche de fonctions de protocole d'application (109) au réseau (200) ;
analyser, par l'unité de détection et de prévention des vulnérabilités (107), l'au moins un paquet IP afin de déterminer si l'au moins un paquet IP est associé à des vulnérabilités de flux de clés prédéterminées ;
**caractérisé en ce que** lorsque l'au moins un paquet IP es déterminé comme étant associé à des vulnérabilités du flux de données prédéterminées, la méthode comprend de:
enregistrer, par l'unité de détection et de prévention des vulnérabilités (107), le champ de données de l'au moins un paquet IP ;
répondre, par la couche de fonctions de protocole d'application (109), avec un paquet IP répondu avec le même champ de données que l'au moins un paquet IP ; et
remplacer, par l'unité de détection et de prévention des vulnérabilités (107), le champ de données du paquet IP répondu par des octets aléatoires lorsque l'unité de détection et de prévention des vulnérabilités (107) détecte un champ de données dupliqué dans le paquet IP répondu, de sorte que le paquet IP répondu ne peut pas être utilisé pour dériver un flux de clés.

2. La méthode selon la revendication 1, dans laquelle la méthode comprend en outre l'envoi, par l'unité de détection et de prévention de la vulnérabilité (107), d'un message d'avertissement à une interface utilisateur (110) de l'unité de détection et de prévention de la vulnérabilité (107) en réponse à la détermination que l'au moins un paquet IP est associé aux vulnérabilités prédéterminées du flux de données clé.

3. Méthode selon la revendication 2, dans laquelle la méthode comprend en outre:
la désactivation, par l'interface utilisateur (110) de l'unité de détection et de prévention des vulnérabilités (107), de l'unité de détection et de prévention des vulnérabilités (107).

4. Méthode selon la revendication 1, dans laquelle l'unité de détection et de prévention des vulnérabilités (107) effectue l'analyse de l'au moins un paquet IP pour déterminer si l'au moins un paquet IP est associé aux vulnérabilités prédéterminées du flux de données clé en utilisant une base de données de vulnérabilités utilisant l'au moins un paquet IP comme données d'entrée.

5. Méthode selon la revendication 4, dans laquelle la méthode comprend en outre:
l'envoi, par le serveur, de la base de données de vulnérabilité à l'équipement mobile (100) ;
envoi, par l'interface utilisateur (110) de l'unité de détection et de prévention de la vulnérabilité (107), d'une demande de confirmation de l'activation de la mise à jour de la base de données de vulnérabilité envoyée à l'unité de détection et de prévention de la vulnérabilité (107) à l'utilisateur ; et
la mise à jour, par l'unité de détection et de prévention des vulnérabilités (107), de la base de données des vulnérabilités dans l'unité de détection et de prévention des vulnérabilités (107) en réponse à la confirmation par l'utilisateur de l'activation de la mise à jour de la base de données des vulnérabilités envoyée à l'unité de détection et de prévention des vulnérabilités (107).

6. Méthode selon la revendication 5, dans laquelle la mise à jour, par l'unité de détection et de prévention des vulnérabilités (107), de la base de données des vulnérabilités dans l'unité de détection et de prévention des vulnérabilités est effectuée automatiquement (107).

7. Méthode selon la revendication 5 ou 6, dans laquelle la mise à jour de la base de données sur les vulnérabilités peut être effectuée par un mécanisme OTA (Over-The-Air) ou par l'Internet.

8. Support de stockage lisible par ordinateur contenant des instructions informatiques qui, lorsqu'elles sont exécutées, permettent à un ordinateur de mettre en œuvre la méthode décrite dans l'une des revendications 1 à 7.

9. Équipement mobile (100) comprenant un processeur d'application (108), un processeur de bande de base (101) et une unité de détection et de prévention des vulnérabilités (107) pour détecter et prévenir les vulnérabilités pour la protection du flux de données, dans lequel :
l'unité de détection et de prévention des vulnérabilités (107) est située dans au moins une région de traitement sécurisée indépendante du processeur d'application (108) et du processeur de bande de base (101) ;
L'unité de détection et de prévention des vulnérabilités (107) est configurée pour recevoir au moins un paquet IP d'une pluralité de paquets IP, la pluralité de paquets IP étant envoyée d'un réseau (200) à une couche de fonctions de protocole d'application (109) dans le processeur d'application (108), ou envoyée de la couche de fonctions de protocole d'application (109) au réseau (200) ;
l'unité de détection et de prévention des vulnérabilités (107) est en outre configurée pour analyser l'au moins un paquet IP afin de déterminer si l'au moins un paquet IP est associé à des vulnérabilités de flux de clés prédéterminées ;
l'unité de détection et de prévention des vulnérabilités (107) est en outre configurée pour analyser au moins un paquet IP afin de déterminer si le paquet au moins est associé à des vulnérabilités prédéterminées du flux de données clé :
l'unité de détection et de prévention des vulnérabilités (107) enregistre le champ de données du paquet IP au moins ;
la couche de fonctions de protocole d'application (109) répond par un paquet IP contenant le même champ de données que l'au moins un paquet IP ; et
l'unité de détection et de prévention des vulnérabilités (107) remplace le champ de données du paquet IP en réponse par des octets aléatoires lorsqu'elle détecte un champ de données dupliqué dans le paquet IP en réponse, de sorte que le paquet IP en réponse ne peut pas être utilisé pour dériver un flux de clés.

10. L'équipement (100) selon la revendication 9, dans lequel l'unité de détection et de prévention des vulnérabilités (107) est configurée pour être située dans une zone de confiance du processeur de bande de base (101).

11. L'équipement (100) selon la revendication 10, dans lequel l'unité de détection et de prévention des vulnérabilités (107) est configurée pour envoyer un message d'avertissement à une interface utilisateur (110) de l'unité de détection et de prévention des vulnérabilités (107) en réponse à la détermination que l'au moins un paquet IP est associé aux vulnérabilités prédéterminées du flux de données clé.

12. L'équipement (100) selon la revendication 9, dans lequel l'unité de détection et de prévention des vulnérabilités (107) effectue l'analyse de l'au moins un paquet IP pour déterminer si l'au moins un paquet IP est associé aux vulnérabilités prédéterminées du flux de données clé en utilisant une base de données de vulnérabilités utilisant l'au moins un paquet IP comme données d'entrée.

13. Système de détection et de prévention des vulnérabilités pour la protection du flux de données, comprenant
un équipement mobile (100) selon l'une des revendications 9 à 12 ; et
un serveur, dans lequel
l'unité de détection et de prévention des vulnérabilités (107) est configurée pour collecter un ensemble de données sur les vulnérabilités comprenant au moins un paquet IP et les résultats de la vérification de la vulnérabilité , et pour envoyer l'ensemble de données au processeur d'application (108) ou au processeur de bande de base (101) pour qu'il le transmette au serveur ; et
le serveur est configuré pour analyser et mettre à jour la base de données de vulnérabilité sur la base de l'ensemble de données.

14. Le système selon la revendication 13, dans lequel :
le serveur est configuré pour envoyer la base de données de vulnérabilité au processeur d'application (108) ou au processeur de bande de base (101) ;
l'interface utilisateur (110) de l'unité de détection et de prévention des vulnérabilités (107) est configurée pour envoyer à l'utilisateur une demande de confirmation de l'activation de la mise à jour de la base de données des vulnérabilités envoyée à l'unité de détection et de prévention des vulnérabilités (107) ; et
l'unité de détection et de prévention des vulnérabilités (107) est configurée pour mettre à jour la base de données des vulnérabilités dans l'unité de détection et de prévention des vulnérabilités (107) en réponse à la confirmation par l'utilisateur de l'activation de la mise à jour de la base de données des vulnérabilités envoyée à l'unité de détection et de prévention des vulnérabilités (107).

15. Système selon la revendication 14, dans lequel l'unité de détection et de prévention des vulnérabilités (107) effectue automatiquement la mise à jour de la base de données des vulnérabilités dans l'unité de détection et de prévention des vulnérabilités (107).

16. Le système selon la revendication 13 ou 14, dans lequel la mise à jour de la base de données de vulnérabilité peut être effectuée par un mécanisme OTA (Over-The-Air) ou par l'Internet.
